# EUROPÄISCHE PATENTSCHRIFT

(11) **EP 2 789 864 B1**
(45) Veröffentlichungstag und Bekanntmachung des Hinweises auf die Patenterteilung: **14.09.2016**
(21) Anmeldenummer: 13401026.3
(22) Anmeldetag: 15.03.2013
(51) Int. Cl.: F16B 13/14, F16B 25/00, F16B 33/02

(54) **Schraube**
Screw
Vis

(43) Veröffentlichungstag der Anmeldung: 15.10.2014
(73) Patentinhaber: SG Holding UG, 30952 Ronnenberg (DE)
(72) Erfinder: Göttlich, Harald, 30900 Wedemark (DE)
(74) Vertreter: Scheffler, Jörg

(56) Entgegenhaltungen:
- EP-A1- 2 098 736
- EP-A1- 2 354 572
- GB-A- 2 455 533
- US-A1- 2005 129 484

## Beschreibung

Die Erfindung betrifft eine zum Einschrauben in ein Bohrloch in einem Massivkörper, insbesondere mit einem wesentlichen Materialanteil aus Beton, bestimmte Schraube, entsprechend den Merkmalen aus dem Oberbegriff des Anspruchs 1 (EP 2 098 736 A1). Eine solche Schraube wird in der Praxis bereits vielfach eingesetzt und zählt daher durch offenkundige Vorbenutzung zum Stand der Technik. Derartige Schrauben sind als gewindeschneidende, also beim Eindrehen in das Bohrloch in dessen Wandfläche furchende Schrauben ausgeführt. Obwohl es beim Eindrehen in das Bohrloch zu einem Einschneiden des Gewindes in das Bohrloch kommt, wird die Haltekraft der Schraube dennoch maßgeblich durch die in das Bohrloch einzubringende, aushärtbare Masse erhöht.

Eine Schraube ist beispielsweise aus der DE 198 20 671 A1 bekannt, die insbesondere zur Befestigung von Gegenständen an Untergründen aus Beton eingesetzt wird. Um einerseits ein geringes Einschraubmoment und andererseits eine hohe Auszugsfestigkeit zu erreichen, wird die Schraube in ein Bohrloch mit einer aushärtbaren Masse eingeschraubt. Die Gewindeflanke dringt dabei nur zu einem geringen Teil in den umgebenden Untergrund ein, wodurch ein geringes Einschraubmoment notwendig ist. Nach dem Aushärten ist das Gewinde teilweise in Vollbaustoff und teilweise in der ausgehärteten Masse eingebettet. Hierdurch wird eine hohe Auszugsfestigkeit erreicht.

Aus der DE 199 44 602 A1 ist eine Schraube bekannt, die in ein Bohrloch in einem festen, aber porösen Material, insbesondere Beton, eingesetzt wird. Zuvor wird eine Patrone in das Bohrloch eingeschoben und anschließend die gewindeschneidende Schraube eingedreht. Dadurch wird eine in der Patrone enthaltene aushärtbare Masse unter Druck in einem zwischen der Bohrlochwand und dem Kern der Schraube ausgebildeten Kanal radial nach außen in das umgebende Material gepresst.

Die DE 103 11 471 A1 betrifft eine gewindeformende Schraube für harte Vollbaustoffe, deren Gewinde sich teilweise über die Länge des Schraubenschafts erstreckt und die in ein Bohrloch mit einer aushärtbaren Masse eingeschraubt wird.

Weiterhin ist auch aus der EP 0 955 476 A2 eine selbstschneidende Schraube zum Einsatz in Vollbaustoffen bekannt. Das Bohrloch ist mit einer aushärtbaren Masse so befüllt, dass nach dem Aushärten der Masse das Gewinde teilweise im Vollbaustoff und teilweise in einer ausgehärteten Mörtelschale eingebettet ist.

Darüber hinaus sind auch noch Gewindestangen bekannt, die in ein mit deutlichem Übermaß hergestelltes Bohrloch ohne Kontakt zu der Innenwandfläche des Bohrlochs eingesetzt und dort mittels aushärtbarer Masse fixiert werden.

Eine Gewinde- bzw. Ankerstange ist aus der EP 0 199 671 B1 bekannt, die den Einsatz von Patronen bei der Befestigung solcher Ankerstangen in Bohrlöchern beschreibt. Die dabei verwendete aushärtbare Masse besteht aus einem Zwei-Komponentensystem auf Acrylatharzbasis. Die Patrone wird zur Fixierung in das Bohrloch eingesetzt und anschließend eine Ankerstange, deren Außendurchmesser kleiner ist als der Durchmesser des Bohrlochs, in das zuvor vom Bohrmehl durch Ausblasen befreite Bohrloch eingeschoben. Danach wird die Ankerstange unter Schlag-Drehen in das Bohrloch eingeschoben. Hierbei wird die Patrone zerstört, deren Inhalt vermischt und im Bohrloch verteilt. Anschließend erfolgt ein Aushärten. Während dieser Zeit darf die Ankerstange nicht berührt werden, da sie keine eigene Festigkeit bzw. Halterung im Bohrloch aufweist.

Der vorliegenden Erfindung liegt die Aufgabe zugrunde, eine Möglichkeit zu schaffen, die Fixierung der Schraube wesentlich zu verbessern. Insbesondere soll aufgrund der konstruktiven Ausgestaltung der Schraube das Ausfallrisiko bei einer fehlerhaften Montage verringert werden.

Diese Aufgabe wird erfindungsgemäß mit einer Schraube gemäß den Merkmalen des Anspruchs 1 gelöst. Die weitere Ausgestaltung der Erfindung ist den Unteransprüchen zu entnehmen.

Erfindungsgemäß ist also eine Schraube vorgesehen, die mehrere, insbesondere drei Gewindegänge aufweist, die einander nicht berühren und vorzugsweise einen konstanten Abstand in Richtung der Längsachse der Schraube aufweisen. Die Erfindung geht dabei von der Erkenntnis aus, dass die Betonschraube vorzugsweise drei oder mehr am Umfang gleichverteilte Gewindegänge aufweist, wodurch zwischen den benachbarten Gewindegängen und der Bohrlochinnenwandfläche separate, miteinander nicht verbundene helixförmige Kammern gebildet werden. In Bezug auf eine beliebige Querschnittsebene sind dort stets drei Kammern definiert, die einen jeweiligen Anteil des Umfangs begrenzen. Der wesentliche erfindungsgemäße Effekt ist die dadurch erzielbare erhöhte Sicherheit gegenüber einem fehlerhaften Einbringen der aushärtbaren Masse. Wenn es in der Praxis zu unerwünschten Lufteinschlüssen kommt, beschränken sich bei der erfindungsgemäßen Schraube derartige Lufteinschlüsse, wie praktische Versuche bereits überzeugend bestätigt haben, auf einen einzelnen der mehrere miteinander nicht verbundenen helixförmigen Zwischenräume zwischen benachbarten Gewindegängen, also auf eine einzige Gewindenut. Bezogen auf die Querschnittsebene ist bei derartigen Montagefehlern bei mehreren Gewindegängen daher nur ein anteiliger Umfangsabschnitt von dem Lufteinschluss betroffen, während die übrigen Gewindegänge mit der erforderlichen Menge der aushärtbaren Masse versorgt werden. Bezogen auf die Längserstreckung der Schraube ist diese also auch dann über den gesamten Umfang von der aushärtbaren Masse eingeschlossen, wenn eine einzelne Gewindenut zwischen zwei Gewindegängen nicht oder nicht ausreichend mit der entsprechenden aushärtbaren Masse versorgt ist, sodass in der Praxis in jedem Fall eine ausreichende Fixierkraft erreicht wird.

Eine gleichmäßige Kraftübertragung über den gesamten Umfang der Schraube wird insbesondere auch dadurch begünstigt, dass die Gewindegänge am Umfang insbesondere gleichverteilt angeordnet sind und daher eine übereinstimmende Menge des aushärtbaren Volumens aufnehmen können. Die Fixierkräfte sind somit für alle Gewindegänge gleich.

Wenn man berücksichtigt, dass bereits geringe Abweichungen von einer vertikalen Orientierung der Schraube dazu führen können, dass sich die aushärtbare Masse bei einer Schraube nach dem Stand der Technik vornehmlich in einem bestimmten Umfangsabschnitt sammelt, so kann dies bei der erfindungsgemäßen Schraube durch die mehreren Kammern zuverlässig vermieden werden.

Dabei kann es von Vorteil sein, wenn in die verschiedenen Gewindenuten unterschiedliche aushärtbare Massen, insbesondere also mit unterschiedlichen chemischen oder physikalischen Eigenschaften, eingeführt werden, um so durch die Kombination unterschiedlicher chemischer Bindungen in dem Bohrloch optimale Fixierkräfte zu erzeugen.

Aber auch bei einem korrekten Montageprozess erweist sich die erfindungsgemäße Schraube aufgrund der gleichmäßigen radialen Fixierkräfte in dem Bohrloch und der damit verbundenen Zentrierung innerhalb des Bohrlochs als überlegen.

Indem zumindest ein Gewindegang in das Bohrloch furchend eindrehbar und zumindest ein weiterer Gewindegang in der Innenwandfläche des Bohrlochs lediglich berührend bzw. tangierend in das Bohrloch eindrehbar ist, eignet sich die erfindungsgemäße Schraube sowohl für den gewindeschneidenden Einsatz als auch für einen lediglich berührenden Kontakt mit der Innenwandfläche. Sofern der Innendurchmesser des Bohrlochs kleiner als der Durchmesser der Schraube gewählt wird, kommt es beim Eindrehen der Schraube in das Bohrloch zu einem Gewindefurchen, wobei das Gewinde selbstschneidend wirkt und die Haltekraft ohne aushärtbare Masse erreicht wird. Wenn das Bohrloch mit entsprechender Größe ausgeführt wird, wirken die Gewindegänge durch eine lediglich berührende Anlage an der Innenwandfläche als Zentrierhilfe. Die Fixierung der Schraube in dem Bohrloch wird dann durch die aushärtbare Masse erreicht.

Indem die Schraube zumindest einen Gewindegang ohne eine beim Eindrehen in das Bohrloch gewindefurchende Funktion aufweist, sind die Eindrehmomente gegenüber einer gewindeschneidenden Schraube deutlich reduziert. Auch bei einer solchen Ausgestaltung mit zumindest einer gegenüber den übrigen Gewindegängen vergrößerten Querschnittsform werden die Vorteile der Kammerbildung zwischen den folgenden Gewindegängen zuverlässig erreicht.

Es hat sich gezeigt, dass die erfindungsgemäße Schraube gegenüber einer in der Praxis nicht zuverlässig vermeidbaren, gegenüber der zu der Bohrlochmittelachse geneigten Anordnung eine hohe Fehlertoleranz aufweist und insbesondere dennoch eine unerwünschte Ansammlung und damit ungleiche Verteilung der aushärtbaren Masse vermieden werden kann.

Wenn darüber hinaus ein Gewindegang gegenüber den übrigen Gewindegängen einen größeren Umfang bzw. Hüllkreis aufweist, eignet sich die Schraube auch für eine neue Anordnung, bei der die Schraube mit dem großen Gewindegang selbstschneidend, also furchend in die Innenwandfläche des Bohrlochs eingreift, während die übrigen Gewindegänge lediglich mit der Innenwandfläche abschließen. Die Fixierkräfte können durch die kombinierte kraft- und formschlüssige Verbindung deutlich erhöht werden, ohne dass die Montagekräfte unerwünscht stark ansteigen. Durch diese Ausgestaltung eignet sich die Schraube auch für das direkte Einschrauben in das Bohrloch, ohne den Einsatz einer aushärtbaren Masse.

Dabei ist es besonders Erfolg versprechend, wenn sich die Gewindegänge zumindest auf einem zylindrischen Schaftabschnitt zwischen einem Schraubenkopf und einem dem Schraubenkopf abgewandten Endabschnitt der Schraube erstrecken, sodass die bedarfsweise zuzuführende aushärtbare Masse gleichmäßig über die gesamte Längserstreckung der Schraube verteilt zwischen den Gewindegängen eingebracht werden kann und dennoch zugleich eine räumliche Trennung der Gewindenuten sichergestellt ist.

Besonders bevorzugt ist der Endabschnitt als ein Kegelstumpf ausgeführt und mit einer stirnseitigen Aufnahme für eine axial vorspringend einsetzbare Patrone ausgestattet, welche die aushärtbare Masse enthält. Hierdurch wird eine besonders einfache Handhabung der Schraube sichergestellt, die hierzu bereits an ihrem stumpfen Ende eine entsprechende Menge der aushärtbaren Masse aufnimmt. Diese wird beim Eindrehen in das Bohrloch gleichmäßig verteilt und gelangt so zu gleichen Teilen in die verschiedenen Gewindenuten. Montagefehler können dadurch vermieden werden.

Vorzugsweise stimmt der Flankenwinkel zumindest der Gewindegänge mit demselben Durchmesser überein, sodass die gewindefurchenden Eigenschaften ebenfalls im Wesentlichen gleich sind. Selbstverständlich kann der Flankenwinkel auch an die gewünschte Förder- bzw. Transportwirkung für die aushärtbare Masse bei einer nichtfurchenden Verwendung der Schraube angepasst werden.

Der Kerndurchmesser könnte in Achsrichtung derart variieren, dass die Gewindenuten unabhängig von den unterschiedlichen Durchmessern der diese jeweils begrenzenden Gewindegänge eine übereinstimmende Tiefe bzw. Querschnittsfläche aufweisen, sodass diese die gleiche Menge der aushärtbaren Masse aufnehmen können. Besonders praxisgerecht ist es hingegen, wenn der jeweilige Kerndurchmesser des Schafts zwischen den Gewindegängen im Verlauf des Schafts zwischen dem Schraubenkopf und dem Endabschnitt konstant ist.

Besonders zweckmäßig ist auch eine Ausführungsform der Erfindung, bei welcher der Schraubenkopf mit einer Werkzeugaufnahme ausgestattet ist. Ebenso sind auch vorteilhafte Varianten realisierbar, bei denen der Schraubenkopf beispielsweise als ein Gewindebolzen zur Befestigung von Objekten mittels einer Gewindemutter ausgeführt ist. Hierdurch lässt sich die Schraube beispielsweise auch als Erdanker verwenden.

Vorzugsweise wird das Bohrloch vor dem Einsatz von Verbundankern bzw. Verbundschrauben gereinigt. Ist das Bohrloch vom Bohrmehl bzw. Bohrabrieb befreit, treten keinerlei Beeinträchtigungen der aushärtbaren Masse durch das Bohrmehl auf.

Sofern sich in dem Bohrloch noch Abrieb der Bohrlochwandung befindet, kann sich dieser mit der sich bereits im Bohrloch befindenden aushärtbaren Masse vermischen. Eine solche Vermischung mit Abrieb wirkt sich dann weitaus weniger nachteilig auf das Last- bzw. Tragverhalten der aushärtbaren Masse aus, wenn eine aushärtbare Masse ohne einen Epoxidharzanteil verwendet wird.

Bei einer besonders bevorzugten Variante der erfindungsgemäßen Schraube in Verbindung mit dem Einsatz einer aushärtbaren Masse schneidet diese nicht gewindefurchend in die Bohrlochwandung ein. Hierdurch werden keine zusätzlichen Verunreinigungen durch Abrieb erzeugt, die die aushärtbare Masse negativ beeinflussen. Versuche haben gezeigt, dass in vielen Fällen ein zusätzlich gewindefurchendes Einschneiden der Schraube in die Bohrlochwandung nicht zur Verbesserung des Tragverhaltens beiträgt und die Belastbarkeit unabhängig davon ist, ob die Gewindegänge selbstschneidend bzw. furchend ausgeführt sind oder die Gewindegänge nur an der Bohrlochwandung anliegen.

In der Praxis ist der negative Einfluss der Verunreinigung der aushärtbaren Masse im Allgemeinen von größerem Einfluss als der Zugewinn an Tragfähigkeit durch Einschneiden. Gerade bei Epoxidharzen sind Verunreinigungen sehr negativ.

Bei dem Gebrauch einer Schraube mit furchendem Einschneiden ohne aushärtbare Masse oder ohne furchendes Einschneiden mit aushärtbarer Masse tragen zwei physikalische Effekte zur Erhöhung des Auszugswiederstands bei. Zum einen ist es das Vergrößern der wirksamen Querschnittsfläche der Schraube, zum anderen das Vergrößern der Reaktionsfläche zwischen der aushärtbaren Masse sowie der Bohrlochwand und der Schraube. Gemäß einer besonders zweckmäßigen Ausgestaltung der Erfindung ist daher der Abstand zwischen einem Kern der Schraube und einem äußeren Umfang des jeweiligen Gewindegangs größer als 1 mm. Durch die vornehmliche Ausbildung der erfindungsgemäßen Schraube mit drei über den Schraubenquerschnitt verteilten Gewindegängen wird die aktive Reaktionsfläche zwischen der Schraube und der aushärtbaren Masse wesentlich erhöht. Dieser Effekt trägt maßgeblich positiv zur Erhöhung des Tragverhaltens der Schraube bei. Ein solcher Effekt ist für das Tragverhalten oftmals wesentlicher als ein furchendes Einschneiden der Gewindegänge.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
Fig. 1 eine Seitenansicht einer erfindungsgemäßen Schraube;
Fig. 2 eine entlang der Linie II-II geschnittene Ansicht der in Figur 1 gezeigten Schraube;
Fig. 3 einen Querschnitt entlang der Linie III-III der in Figur 1 gezeigten Schraube.

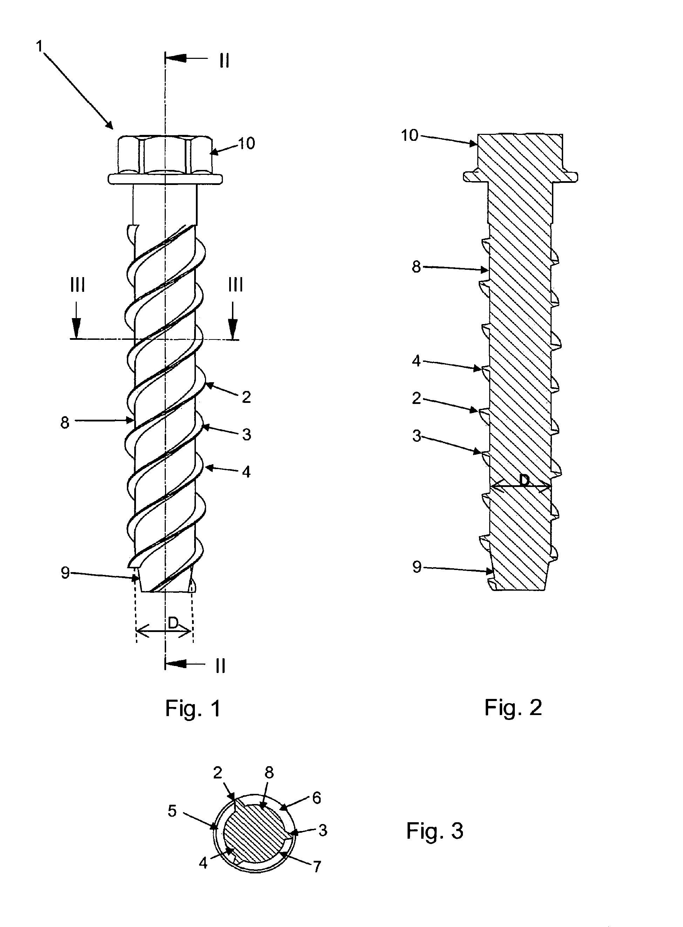

Eine erfindungsgemäße Schraube 1 wird nachstehend anhand der Figuren 1 bis 3 näher erläutert, welche die Schraube 1 in einer Seitenansicht sowie in einem Längs- und einem Querschnitt zeigen. Die Schraube 1 ist zum Einschrauben in ein nicht dargestelltes Bohrloch in einem Massivkörper bestimmt, wobei die Haltekraft der Schraube 1 in dem Bohrloch durch Zugabe einer in das Bohrloch einzubringenden, aushärtbaren Masse bestimmt ist. Um auch bei Montagefehlern, die in der Praxis zu Lufteinschlüssen zwischen der Schraube 1 und einer Innenwandfläche des Bohrlochs führen können, zuverlässig eine ausreichende Fixierkraft sicherzustellen, hat die Schraube 1 drei Gewindegänge 2, 3, 4, die über den Umfang gleichverteilt sind. Wie insbesondere in Figur 3 in einer Darstellung des Querschnitts erkennbar, wird der Umfang dadurch in drei gleich große Kreisringausschnitte 5, 6, 7 unterteilt, die jeweils gegeneinander abgegrenzt sind. Sofern die Montagefehler beispielsweise zu einem Lufteinschluss führen, beschränkt dieser sich in der Praxis auf einen einzelnen dieser Kreisringausschnitte 5, 6, 7. Es ist leicht verständlich, dass der jeweilige Kreisringausschnitt 5, 6, 7 dem helixförmigen Verlauf der Gewindegänge 2, 3, 4 folgend in verschiedenen Querschnittsebenen in Längsrichtung der Schraube 1 unterschiedliche Winkelbereiche einnimmt. Somit ist eine Versorgung der Schraube 1 mit einer ausreichenden Menge der aushärtbaren Masse über den gesamten Umfang sichergestellt und die gewünschte Fixierkraft auch bei Montagefehlern gewährleistet. Die Schraube 1 ist aber auch ohne aushärtbare Masse in das Bohrloch eindrehbar. Hierzu weist ein erster Gewindegang 2 gegenüber den übrigen Gewindegängen 3, 4 einen größeren Umfang auf, sodass der erste Gewindegang 2 in das Bohrloch furchend eindrehbar ist und die anderen Gewindegänge 3, 4 in der Innenwandfläche des Bohrlochs lediglich anliegen. Hierdurch wird eine hohe Fixierkraft bei zugleich vergleichsweise geringen Montagekräften und erstmals eine Schraube 1 realisiert, die in dem Massivkörper sowohl mit als auch ohne aushärtbare Masse zuverlässig fixierbar ist. Dabei erstrecken sich alle Gewindegänge 2, 3, 4 von dem zylindrischen Schaft 8 mit konstantem Kerndurchmesser D bis in einen kegelstumpfförmigen Endabschnitt 9. Bei der dargestellten Variante ist ein Schraubenkopf 10 mit einer normgerechten Werkzeugaufnahme ausgestattet und eignet sich dadurch für einen universellen Einsatz für unterschiedliche Anwendungszwecke.

Bei einem horizontalen Einsatz der Schraube 1 wirken die drei Gewindegänge 2, 3, 4 als Zentrierhilfe. Es wird somit verhindert, dass die Gewindestange im horizontalen Bohrloch gegen eine untere Bohrlochwandung anliegt und dann nicht mehr über den Querschnitt gleichverteilt mit aushärtbarer Masse ummantelt ist.

## Patentansprüche

1. Eine zum Einschrauben in ein Bohrloch in einem Massivkörper, insbesondere mit einem wesentlichen Materialanteil aus Beton, bestimmte Schraube (1), wobei die Haltekraft der Schraube (1) in dem Bohrloch durch Zugabe einer in das Bohrloch einzubringenden, aushärtbaren Masse erhöht ist, wobei die Schraube (1) mehrere, insbesondere drei Gewindegänge (2, 3, 4) und einen als ein Kegelstumpf ausgeführten Endabschnitt (9) aufweist, **dadurch gekennzeichnet, dass** die Gewindegänge (2, 3, 4) am Umfang gleichverteilt angeordnet sind und sich alle Gewindegänge (2, 3, 4) zwischen einem Schraubenkopf (10) und dem dem Schraubenkopf (10) abgewandten Endabschnitt (9) erstrecken.

2. Schraube (1) nach Anspruch 1, **dadurch gekennzeichnet, dass** die Schraube (1) in einem mit einem Kerndurchmesser vorgebohrten Bohrloch mit allen oder einzelnen Gewindegängen (2, 3, 4) einschneidet und sich ohne Zugabe von aushärtbarer Masse wie eine Betonschraube verhält.

3. Schraube (1) nach den Ansprüchen 1 oder 2, **dadurch gekennzeichnet, dass** zumindest ein erster Gewindegang (2) in dem Bohrloch furchend eindrehbar und zumindest ein weiterer Gewindegang (3, 4) in der Innenwandfläche des Bohrlochs lediglich berührend eindrehbar ist, indem der erste Gewindegang (2) einen größeren Durchmesser als die weiteren Gewindegänge (3, 4) aufweist.

4. Schraube (1) nach zumindest einem der vorhergehenden Ansprüche, **dadurch gekennzeichnet, dass** sich die Gewindegänge (2, 3, 4) zumindest abschnittsweise auf einem zylindrischen Schaft (8) der Schraube (1) erstrecken.

5. Schraube (1) nach Anspruch 1, **dadurch gekennzeichnet, dass** der Endabschnitt (9) mit einer stirnseitigen Aufnahme für eine axial vorspringend einsetzbare Patrone mit einer aushärtbaren Masse ausgestattet ist.

6. Schraube (1) nach zumindest einem der vorhergehenden Ansprüche, **dadurch gekennzeichnet, dass** der Flankenwinkel mehrerer Gewindegänge (2, 3,4) übereinstimmt.

7. Schraube (1) nach zumindest einem der vorhergehenden Ansprüche, **dadurch gekennzeichnet, dass** der jeweilige Kerndurchmesser (D) des Schafts (8) zwischen den Gewindegängen (2, 3, 4) im Verlauf des Schafts (8) zwischen dem Schraubenkopf (10) und dem Endabschnitt (9) konstant ist.

8. Schraube (1) nach zumindest einem der vorhergehenden Ansprüche, **dadurch gekennzeichnet, dass** der Abstand zwischen einem Kern der Schraube (1) und einem äußeren Umfang des jeweiligen Gewindegangs (2, 3, 4) größer als 1 mm ist.

9. Schraube (1) nach zumindest einem der vorhergehenden Ansprüche, **dadurch gekennzeichnet, dass** der Schraubenkopf (10) mit einer Werkzeugaufnahme ausgestattet ist.

## Claims

1. Screw (1) intended to be screwed into a drill hole in a solid body, in particular having a substantial concrete material proportion, wherein the retaining force of the screw (1) in the drill hole is increased by the addition of a curable compound to be introduced into the drill hole, wherein the screw (1) has a plurality of, in particular three, threads (2, 3, 4) and an end portion (9) embodied as a truncated cone, **characterized in that** the threads (2, 3, 4) are arranged in an evenly distributed manner around the circumference and all of the threads (2, 3, 4) extend between a screw head (10) and the end portion (9) remote from the screw head (10).

2. Screw (1) according to Claim 1, **characterized in that** the screw (1) cuts into a drill hole, predrilled with a core diameter, with all of the threads (2, 3, 4) or individual threads (2, 3, 4), and behaves like a concrete screw without the addition of curable compound.

3. Screw (1) according to Claim 1 or 2, **characterized in that** at least a first thread (2) is able to be screwed in in a manner digging into the drill hole and at least one further thread (3, 4) is able to be screwed in in a manner merely contacting the inner wall surface of the drill hole, **in that** the first thread (2) has a larger diameter than the further threads (3, 4).

4. Screw (1) according to at least one of the preceding claims, **characterized in that** the threads (2, 3, 4) extend at least sectionally along a cylindrical shank (8) of the screw (1).

5. Screw (1) according to Claim 1, **characterized in that** the end portion (9) is equipped with an end-side receptacle for a cartridge containing a curable compound, said cartridge being insertable in an axially protruding manner.

6. Screw (1) according to at least one of the preceding claims, **characterized in that** the flank angle of a plurality of threads (2, 3, 4) corresponds.

7. Screw (1) according to at least one of the preceding claims, **characterized in that** the respective core diameter (D) of the shank (8) between the threads (2, 3, 4) is constant along the shank (8) between the screw head (10) and the end portion (9).

8. Screw (1) according to at least one of the preceding claims, **characterized in that** the spacing between a core of the screw (1) and an outer circumference of the respective thread (2, 3, 4) is greater than 1 mm.

9. Screw (1) according to at least one of the preceding claims, **characterized in that** the screw head (10) is equipped with a tool holder.

## Revendications

1. Vis (1), prévue pour être vissée dans un trou de perçage dans un corps massif, en particulier dont une proportion majeure est constituée de béton, la force de retenue de la vis (1) dans le trou de perçage étant accrue par l'ajout d'une masse durcissable à introduire dans le trou de perçage, la vis (1) présentant plusieurs, en particulier trois, pas de filetage (2, 3, 4) et une portion d'extrémité (9) réalisée sous forme de tronc de cône, **caractérisée en ce que** les pas de vis (2, 3, 4) sont disposés de manière répartie uniformément sur la périphérie et tous les pas de vis (2, 3, 4) s'étendent entre une tête de vis (10) et la portion d'extrémité (9) opposée à la tête de vis (10).

2. Vis (1) selon la revendication 1, **caractérisée en ce que** la vis (1) creuse, dans un trou de perçage préalablement percé avec un diamètre de coeur, avec tous ou certains des pas de vis (2, 3, 4) et se comporte comme une vis à béton sans l'ajout de la masse durcissable.

3. Vis (1) selon les revendications 1 ou 2, **caractérisée en ce qu'**au moins un premier pas de filetage (2) peut être vissé en creusant dans le trou de perçage et au moins un pas de filetage supplémentaire (3, 4) peut être vissé seulement par contact dans la surface de la paroi interne du trou de perçage, le premier pas de filetage (2) présentant un plus grand diamètre que les autres pas de filetage (3, 4).

4. Vis (1) selon au moins l'une quelconque des revendications précédentes, **caractérisée en ce que** les pas de vis (2, 3, 4) s'étendent au moins en partie sur une tige cylindrique (8) de la vis (1).

5. Vis (1) selon la revendication 1, **caractérisée en ce que** la portion d'extrémité (9) est munie d'un logement frontal pour une cartouche comprenant une masse durcissable, pouvant être insérée de manière à faire saillie axialement.

6. Vis (1) selon au moins l'une quelconque des revendications précédentes, **caractérisée en ce que** l'angle de flanc de plusieurs pas de vis (2, 3, 4) coïncide.

7. Vis (1) selon au moins l'une quelconque des revendications précédentes, **caractérisée en ce que** le diamètre de coeur respectif (D) de la tige (8) entre les pas de filetage (2, 3, 4) est constant sur l'étendue de la tige (8) entre la tête de vis (10) et la portion d'extrémité (9).

8. Vis (1) selon au moins l'une quelconque des revendications précédentes, **caractérisée en ce que** la distance entre un coeur de la vis (1) et une périphérie extérieure du pas de filetage respectif (2, 3, 4) est supérieure à 1 mm.

9. Vis (1) selon au moins l'une quelconque des revendications précédentes, **caractérisée en ce que** la tête de vis (10) est munie d'un logement d'outil.
